Europäisches Patentamt

**European Patent Office**

Office européen des brevets

(19)

(11) Numéro de publication: **0 248 704**
B1

(12) FASCICULE DE BREVET EUROPEEN

(45) Date de publication du fascicule du brevet:
03.01.90

(51) Int. Cl.⁴: **F16H 55/28**, F16H 19/04

(21) Numéro de dépôt: **87401153.9**

(22) Date de dépôt: **22.05.87**

(54) **Dispositif de rattrapage de jeu pour moyen de transmission à crémaillère.**

(30) Priorité: **27.05.86 FR 8607535**

(43) Date de publication de la demande:
**09.12.87 Bulletin 87/50**

(45) Mention de la délivrance du brevet:
**03.01.90 Bulletin 90/1**

(84) Etats contractants désignés:
**BE DE ES GB IT NL SE**

(56) Documents cités:
**EP-A- 0 102 511
DE-A- 1 300 395
FR-A- 2 204 167
US-A- 4 550 626**

**PRODUCT ENGINEERING,
vol. 30, no. 44, 26 octobre 1959, pages 72-75, US;
GUTMANN: " 18 ways to control blacklash in gearing"**

(73) Titulaire: **RENAULT AUTOMATION, 8/10 avenue Emile
Zola, F-92109 Boulogne-Billancourt(FR)**

(72) Inventeur: **Paganelli, Cataldo, 6, Square Fernand Widal,
F-91000 Evry(FR)**
Inventeur: **Daniel, Serge, 14, rue du Vieux Rû,
F-77210 Avon(FR)**
Inventeur: **Lagarde, Eric, 2, Villa Carnot,
F-94230 Cachan(FR)**

(74) Mandataire: **Réal, Jacques, 8 & 10, avenue Emile Zola,
F-92109 Boulogne-Billancourt(FR)**

ACTORUM AG

## Description

La présente invention se rapporte à un dispositif de rattrapage de jeu pour moyen de transmission à crémaillère.

Il est connu d'utiliser, pour un système de transmission par engrenages ou pignon-crémaillère, un pignon "souple" à mécanisme interne de rattrapage de jeu.

Il est également décrit dans de document DE-A 1 300 395 (révélant les caractéristiques du préambule de la revendication 1 de l'invention, un dispositif de rattrapage de jeu à lames de ressort fixées aux extrémités d'une crémaillère.

Cette solution n'est pas compatible avec une utilisation intensive dans le domaine de la robotique où la notion de fiabilité s'avère primordiale.

L'invention a pour but de remédier à cet inconvénient.

A cet effet, elle a pour objet un dispositif de rattrapage de jeu pour moyen de transmission à crémaillère du type comprenant un pignon d'entraînement dont la denture coopère en permanence avec celle d'une crémaillère soumise à l'action d'un ressort et comme défini dans la revendication 1 de l'invention.

Suivant une particularité essentielle, ce dispositif comporte un galet presseur maintenu en permanence en appui contre la crémaillère et dans l'axe d'attaque du pignon, d'une part, et des lames flexibles interposées entre chaque extrémité de cette crémaillère et un élément de structure, d'autre part.

Suivant une autre particularité, un système de mise en tension de la crémaillère, constitué notamment par une vis, un ressort, une pièce intermédiaire de bridage et une attache sur structure, est monté à une extrémité de cette crémaillère.

Ces particularités montrent les avantages indéniables suivants que procure un tel dispositif:

- une puissance plus importante peut être transmise au moyen de cette crémaillère dite "flottante" ;
- un rattrapage de jeu sur une forte course ou longueur de crémaillère est rendu possible, et ceci indépendamment de la flexion de cette crémaillère ;
- on s'affranchit d'un positionnement précis de la crémaillère par rapport au pignon, et d'une précision d'usinage sur de grandes longueurs, de par la compensation automatique d'usure et des défauts géométriques ;
- un même effort de précontrainte réglable peut être exercé sur l'ensemble pignon-crémaillère, sur toute la course ;
- un découplage des vibrations à l'engrènement est réalisé avec une diminution significative des bruits ;
- une précision accrue de déplacement ou de positionnement est obtenue par l'intermédiaire notamment d'une fixation par lames flexibles.

D'autres particularités et avantages de l'invention apparaîtront plus clairement à la lecture de la description qui suit d'un mode de réalisation préféré, donné à titre d'exemple non limitatif, en référence aux dessins annexés dans lesquels:

- la figure 1 représente une vue schématique longitudinale d'une "crémaillère flottante" conforme à l'invention ;
- la figure 2 représente une vue en coupe de cette crémaillère suivant le plan A-A de la figure 1 ;
- la figure 3 représente une vue en coupe de cette crémaillère suivant le plan B-B de la figure 1 ;
- la figure 4 représente une vue en coupe de cette crémaillère suivant le plan C-C de la figure 1 ;
- la figure 5 représente une section droite de cette crémaillère suivant le plan D-D de la figure 1 ;
- la figure 6 représente une vue en coupe de cette crémaillère suivant le plan E-E de la figure 1 ;
- et la figure 7 représente une vue en coupe partielle de cette crémaillère suivant le plan F-F de la figure 1.

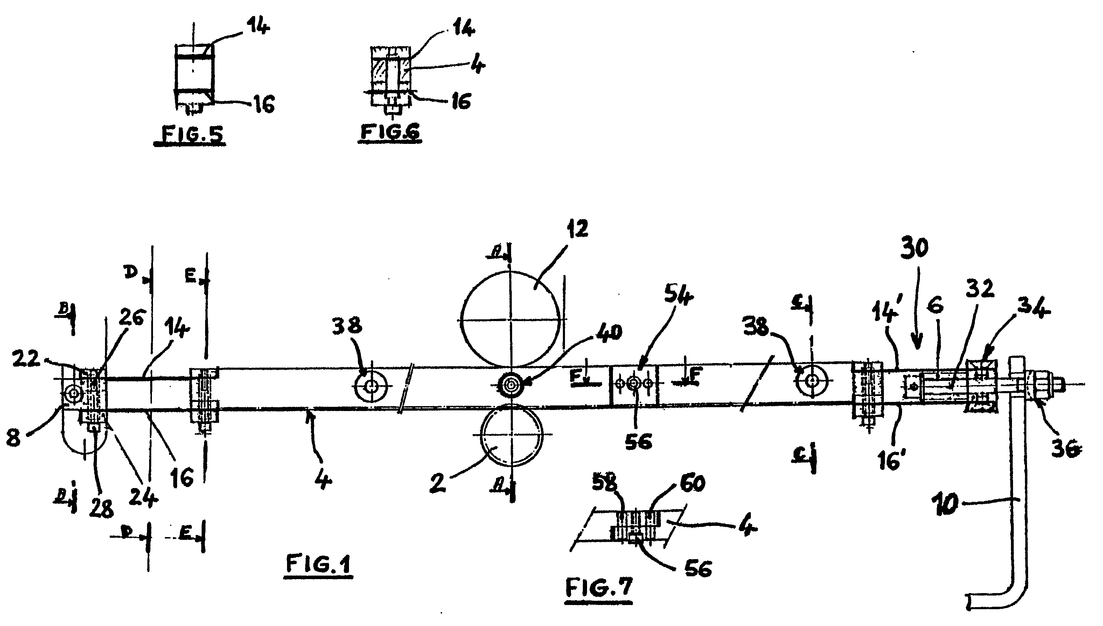

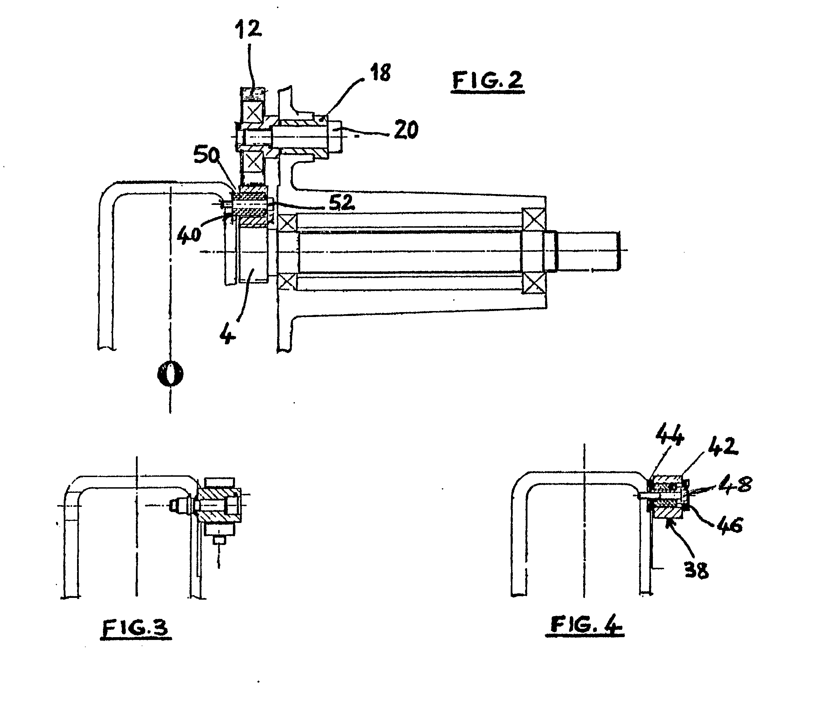

Comme le montre la figure 1, un moyen de transmission à crémaillère est formé d'un pignon d'entraînement 2 dont la denture coopère avec celle d'une crémaillère 4 soumise à l'action d'un ressort 6. Cette crémaillère est disposée entre deux éléments de structure 8, 10 d'un portique d'assemblage non représenté.

Conformément à l'invention, le dispositif de rattrapage de jeu revendiqué comporte un galet presseur 12 et deux lames flexibles 14, 16 ; 14', 16' fixées à chaque extrémité de la crémaillère 4.

Le galet presseur 12 monté sur un excentrique 18, est maintenu en appui sur la face lisse de la crémaillère, à l'opposé du pignon d'entraînement 2. Cet excentrique permet de régler l'effort de précontrainte appliqué à l'ensemble pignon-crémaillère. Une vis 20 assure le blocage de l'ensemble galet-excentrique (figure 2).

Les lames flexibles 14, 16 sont fixées d'un côté à l'élément de structure 8 au moyen d'un dispositif rigide d'ancrage constitué par deux flasques 22, 24, un axe 26 et une vis de serrage 28, et de l'autre côté à la crémaillère de façon analogue (figures 1, 5 et 6).

A l'autre extrémité de la crémaillère, les lames flexibles 14', 16' sont fixées à cette dernière de façon identique, d'un côté, et de l'autre côté à un système de mise en tension 30 de cette crémaillère. Ce système incorpore une vis 32, le ressort 6, une pièce intermédiaire de bridage 34 et une attache 36 sur l'élément de structure 10. Cette vis 32 en comprimant le ressort 6, permet d'exercer un effort de tension déterminé à l'ensemble de la crémaillère.

Ces lames flexibles garantissent une souplesse entre les éléments de châssis 8, 10 et la crémaillère, excepté dans la direction d'engrènement.

Des blocs d'amortissement et de guidage 38 ainsi que des blocs d'amortissement simple 40 sont montés sur la crémaillère 4 suivant un pas d'implantation qui varie en fonction de la longueur de celle-ci (figures 2 et 4). Ces blocs 38 comportent chacun une bague élastique 42, deux rondelles de maintien 44, 46 et une vis 48. La bague élastique permet de limiter la flèche de la crémaillère et les rondelles les déplacements latéraux de celle-ci. Les blocs 40 procurent un amortissement simple par une limitation de la flèche de la crémaillère au moyen d'une bague élastique 50 et d'une vis 52.

Un système de raboutage 54 qui comporte une vis de serrage 56 et deux goupilles 58, 60 facilite la réalisation de "crémaillères flottantes" de grandes longueurs (figure 7).

**Revendications**

1. Dispositif de rattrapage de jeu pour moyen de transmission à crémaillère du type comprenant un pignon d'entraînement (2) dont la denture coopère en permanence avec celle d'une drémaillère (4) dont les extrémités sont montées flottantes, caractérisé en ce qu'il comporte un système de mise en tension (30) constituant une tension axiale dans la crémaillère (4) soumise à l'action d'un ressort (6), un galet presseur (12) maintenu en permanence en appui contre la crémaillère et dans l'axe d'attaque du pignon (2), et des lames flexibles (14, 16, 14', 16') interposées entre chaque extrémité de cette crémaillère et un élément de structure (8, 10), réalisant une crémaillère flottante.

2. Dispositif suivant la revendication 1, caractérisé en ce que ce galet presseur (12) coopère avec un excentrique (18) et une vis de blocage (20).

3. Dispositif suivant la revendication 1 ou 2, caractérisé en ce que ledit système de mise en tension (30) de la crémaillère (4) constitué notamment par une vis (32), le ressort (6), une pièce intermédiaire de bridage (34) et une attache (36) sur structure, est monté à une extrémité de cette crémaillère.

4. Dispositif suivant l'une quelconque des revendications 1, 2 et 3, caractérisé en ce que des blocs d'amortissement et de guidage (38) comportant un bague élastique (42), deux rondelles de maintien (44, 46) et une vis (48) sont montés sur la crémaillère (4) suivant un pas d'implantation dépendant de la longueur de celle-ci.

5. Dispositif suivant l'une quelconque des revendications 1 à 4, caractérisé en ce que des blocs d'amortissement simple (40) comportant une bague élastique (50) et une vis (52) sont fixés sur la crémaillère (4) suivant un pas d'implantation dépendant de la longueur de celle-ci.

6. Dispositif suivant l'une quelconque des revendications 1 à 5, caractérisé en ce que la crémaillère (4) présente un système de raboutage (54) formé d'une vis de serrage (56) et de deux goupilles (58, 60).

**Patentansprüche**

1. Einrichtung zur Spielbeseitigung für Zahnstangengetriebe, mit einem Antriebsritzel 2, dessen Zahnung permanent mit derjenigen einer Zahnstange 4 zusammenwirkt, deren Enden gleitend gelagert sind, dadurch gekennzeichnet, daß sie eine Spannungserzeugungsanordnung 30 aufweist, die eine Axialspannung in der Zahnstange 4 erzeugt, unter der Wirkung einer Feder 6, und ein Druckrad 12 aufweist, das sich ständig auf der Zahnstange und in der Angriffsachse des Ritzels 2 abstützt sowie flexible Federn 14, 16, 14', 16', die zwischen einem jeden Ende der Zahnstange und einem Halterungselement 8, 10 angeordnet sind, um so das Gleiten der Zahnstange zu ermöglichen.

2. Einrichtung nach Anspruch 1, dadurch gekennzeichnet, daß das Druckrad 12 mit einer Exzenter-Scheibe 18 und einer festen Schraube 20 zusammenwirkt.

3. Einrichtung nach Anspruch 1 oder 2, dadurch gekennzeichnet, daß die Spannungserzeugungsanordnung 30 für die Zahnstange 4, die insbesondere aus einer Schraube 32, der Feder 6, einem Klemmstück 34 und einer Halterung 36 für den Aufbau besteht, an einem Ende der Zahnstange angeordnet ist.

4. Einrichtung nach einem der Ansprüche 1, 2 und 3, dadurch gekennzeichnet, daß Puffer- und Führungsblöcke 38, die einen elastischen Ring 42, zwei Haltescheiben 44, 46 und eine Schraube 48 aufweisen, an der Zahnstange 4 angeordnet sind, entsprechend einer von deren Länge abhängigen Stelle.

5. Einrichtung nach einem der Ansprüche 1 bis 4, dadurch gekennzeichnet, daß die einfachen Pufferblöcke 40, die einen elastischen Ring 50 und eine Schraube 52 aufweisen, an der Zahnstange 4 angeordnet sind, entsprechend einer von deren Länge abhängigen Stelle.

6. Einrichtung nach einem der Ansprüche 1 bis 5, dadurch gekennzeichnet, daß die Zahnstange 4 einen Schaftansatz 54 aufweist, der aus einer Klemmschraube 56 und zwei Stiften 58, 60 besteht.

**Claims**

1. An arrangement for taking up play for a rack transmission means of the type comprising a drive pinion (2), the teeth of which permanently co-operate with those of a rack (4), the ends of which are mouted floatingly, characterised in that it comprises a stressing system (30) constituting an axial stress in the rack (4) which is subjected to the action of a spring (6), a pressure roller (12) which is held permanently bearing against the rack and on the axis of engagement of the pinion (2), and flexible blades (14, 16, 14', 16',) interposed between each end of said rack and a structural element (8, 10), providing a floating rack.

2. An arrangement according to claim 1 characterised in that said pressure roller (12) co-operates with an eccentric (18) and a locking screw (20).

3. An arrangement according to claim 1 or claim 2 characterised in that said system (30) for stressing the rack (4), which is formed in particular by a screw (32), the spring (6), an intermediate clamping member (34) and a means (36) for attachment to a structure, is mounted at one end of said rack.

4. An arrangement according to any one of claims 1, 2 and 3 characterised in that damping and guide blocks (38) comprising a resilient ring (42), two holding washers (44, 46) and a screw (48) are mouted on the rack (4) at an installation pitch which is dependent on the length of the rack.

5. An arrangement according to any one of claims 1 to 4 characterised in that simple damping blocks (40) comprising a resilient ring (50) and a screw (52) are fixed on the rack (4) at an installation pitch dependent on the length of the rack.

6. An arrangement according to any one of claims 1 to 5 characterised in that the rack (4) has a joining system (54) formed by a clamping screw (56) and two pins (58, 60).

FIG.1

FIG.5

FIG.6

FIG.7

FIG.2

FIG.3

FIG.4